Europäisches Patentamt

European Patent Office

Office européen des brevets

(11) Publication number: **0 451 914 A1**

# EUROPEAN PATENT APPLICATION

(21) Application number: **91200814.1**

(22) Date of filing: **08.04.91**

(51) Int. Cl.⁵: **A01K 29/00, A22B 7/00**

(30) Priority: **09.04.90 BE 9000391**

(43) Date of publication of application:
**16.10.91 Bulletin 91/42**

(84) Designated Contracting States:
**AT BE CH DE DK ES FR GB GR IT LI LU NL SE**

(71) Applicant: **BVBA LOUIS VICTOR-VERKAIN**
**Leegtestraat 98**
**B-8020 Ruddervoorde(BE)**

(72) Inventor: **Victor, Louis**
**Leegtestraat 98**
**B-8020 Ruddervoorde(BE)**

(74) Representative: **Dopchie, Jean-Marc**
**KORTRIJKS OCTROOI- EN MERKENBUREAU**
**N.V. Kennedypark 21c**
**B-8500 Kortrijk(BE)**

(54) **Carcass house.**

(57) Screening-off bin for the temporary storage of dead animals, with the object of making such storage as hygienic as possible, and in particular of minimizing the risk of infection as far as possible, characterized in that this bin can travel along rails (12), and doors (9) are provided in a side wall situated at right angles to said rails (12), and the bin can, on the one hand, be placed above a layer (13) which is impermeable to fluids and which has collection devices (14) and can, on the other, be placed beside said impermeable layer (13) by travelling on the rails, in which case the open doors (9) can allow through the carcasses stacked thereon.

EP 0 451 914 A1

The present invention relates to a screened-off storage place for dead animals, called a "carcass house" below.

Anyone in possession of one or more animals sooner or later has to contend with one or more of his animals dying.

This event occurs fairly regularly on farms and in similar enterprises, and in general everywhere a large number of animals are collected, for example for breeding purposes. When such animals as cattle, horses, pigs or animals of a comparable size are concerned, there is no alternative but to have the animals collected by a specialist collection service. However, the carcass has to remain lying at the owner's premises while awaiting the service to collect it. The problem now is that in the meantime the owner has to take a number of measures - voluntary, or possibly compulsory in the future - for provisional storage of the carcass, for the sake of hygiene and in view of the risk of spreading contagious diseases.

The measures taken hitherto - and by no means by everyone - consist of the carcasses being deposited in a special place on the farm, out of reach of the other, healthy animals on the farm, and in particular also out of reach of dogs, cats, rats or similar animals, which are attracted by these carcasses. Some very contagious diseases such as, for example, swine fever can be transmitted by the spread of the disease germs following contact with an infected animal or carcass. It is consequently obvious that the healthy animals on the farm must not be allowed to come into contact with the carcasses, and that dogs, cats, rats or similar animals must also be kept away from the carcasses, because they are part of an important group of possible carriers of contagious diseases. For the sake of hygiene the carcasses are deposited in a special enclosed space where they are protected from the weather. The measures concerning the risk of infection are taken in the case of each carcass, since it cannot always be established with certainty whether or not the animal has died or a contagious disease.

The measures which have been taken hitherto - apart from those where the carcasses are just left lying or are stacked in the open air - more specifically consist of the provision of an enclosed space on the farm, or a screening-off bin in which the carcasses can be stacked, protected from the weather and out of reach of other animals which run the risk of becoming infected or of carrying the disease germs. In the event of a contagious disease assuming the form of a real epidemic on a particular farm, the number of carcasses can reach very high proportions, so that the above-mentioned measures are, of course, also of greater importance, on account of any spread of the disease on the farm itself and/or to neighbouring farms. It has hitherto been known for the application of the above-mentioned measures to use a polyester bin, comprising a space enclosed by rectangular upright sides, shut off along the top and open at the bottom, said bin being placed with the open side on the ground, and provided in such a way that it can pivot relative to the bottom edge of one of the upright sides.

For storage of the carcasses the bin is tilted to the side, pivoting relative to one of its bottom edges. The carcasses are then laid on the ground, on the surface which is enclosed when the bin is replaced in a straight position. When the collection services arrive, the bin is opened, and the carcasses can be loaded.

It has, however, been found in the past that the above-mentioned measures are inadequate for the prevention of a very extensive spread of contagious diseases in animals, such as swine fever. For example, it is also very important to prevent blood or other body fluids from the infected carcasses from penetrating into the ground and/or into a ditch, so that disease germs can spread further to farms not yet infected. It is also extremely important to ensure as far as possible that people from the collection service, or possibly their equipment (for example, the lorries) do not carry the disease germs with them to other farms which are not yet infected, and which they have to call at on the same round. For that reason, these people must not come into contact at all with the carcasses themselves, and the lorries should not have to drive onto the infected farms for loading. For it is possible on farms where the disease is widespread that The disease germs could be carried in the dust or mud adhering to the lorry to farms not yet infected.

If, for example, a special building or part of a building is being used for storing the carcasses, the disadvantage of this is, on the one hand, the fact that the escaping body fluids are not collected in a receptacle and can spread in all possible ways on the farm (for example, during cleaning of the storage space) and, on the other, the fact that these buildings are generally not situated in a place which stops the collection services from coming onto the farm, nor can they be erected without great expense at such a place.

Besides, when the carcasses are being loaded the collection service personnel cannot avoid coming into contact with the infected carcasses, due to the fact that they have to be dragged out through a door or gate opening. All this makes it clear that such provisions are totally unsuitable for adequately carrying out the latter-mentioned measures.

Another known measure is the polyester bin mentioned earlier. These bins can be placed in a simple manner in such a way that the collection services do not have to drive onto the farm (for example, next to the public road along which the farm is situated).

A disadvantage of this bin is, however, in the first place the fact that the body fluids of the carcasses can simply seep into the ground and possibly reach neighbouring ditches. Another disadvantage is that for tilting the bins to the side they have to be gripped by the bottom edge, as a result of which an initial contact with the infected carcasses is already possible, and for full open tilting of the bin one then has to reach over the stacked carcasses, or even crawl over them, in which case further contact with the infected carcasses is unavoidable. It can be seen from this that this screening-off bin does not meet the standards required to stop the spread of contagious diseases in animals in an effective manner.

The object of the invention is to provide a screening-off space for dead animals which permits temporary storage of carcasses which may be infected by contagious diseases, in the case of which all the above-mentioned standards concerning hygiene, and in particular as regards the prevention of any further spread of contagious diseases, are met, and in the case of which this screening-off space can be placed without great expense in a position which the collection services can reach without having to go onto the infected farm.

The subject of the invention is a screening-off bin for storing carcasses, comprising a rectangular bin with open bottom side, characterized in that one of the upright side walls is provided with a door or similar device which permits this side wall to open over the entire width, and in that at the bottom edges of the bin bordering the open side, wheels which can travel over rails disposed on the ground are provided, so that the whole bin can be moved by rolling it, while the bottom edges remain at a slight distance from the ground, and in the case of which a layer impermeable to body fluids is provided on the ground over a surface which is enclosed in at least one specific position of the bin by its upright side walls and top wall, while the above-mentioned impermeable layer is made equally sloping everywhere towards one deeper down position where a collection well or collection bin is situated. The rails are also disposed in such a way and are of such length that in at least one position the bin can expose the impermeable layer completely.

The bin stands on the rails in such a way that the upright side wall which is provided with a door or similar device lies at right angles to the direction of the rails - and thus to the direction of movement - and on traversing from the position in which the impermeable layer is exposed to the position in which the impermeable layer is enclosed reaches said impermeable layer first.

The bin can also be provided, in the top face or at the top of the side walls, with air vents which can be shut off with netting or similar means permitting venting, and yet preventing animals such as dogs, cats, rats or mice from entering the storage space.

The carcass house according to the invention is installed at a place which the collection service can reach without going onto the farm. For depositing of the carcasses in the carcass house the door or similar device is first opened and the screening-off bin is then moved on the rails until the impermeable layer and any carcasses lying on it are completely uncovered by the bin, and said bin sits on the rails further on. Through the fact that an upright side wall is provided with a door or similar device, the bin with open side wall can be moved away unimpeded from one or more carcasses stacked on the impermeable layer and can be rolled back over them, while by means of the open side wall one or more carcasses come to lie in or outside the screening-off space during travelling of the bin.

An advantage of the carcass house according to the invention is the fact that, in addition to the known measures concerning hygiene and the risk of infection being satisfactorily carried out, the body fluids escaping from the carcasses do not go into the ground and/or cannot pass into a nearby ditch, but are collected in a collection well or collection bin.

An additional advantage of the carcass house according to the invention is the fact that the carcasses can be placed outside the carcass house without anyone coming into contact with them, since only the carcass house need be pushed away.

Another attendant advantage of the carcass house according to the invention is the fact that the structure can be erected in a simple manner in the desired position at moderate cost.

Further features and advantages of the carcass house according to the invention will emerge from the description which follows of a preferred embodiment of the carcass house according to the invention, but the invention is not restricted to this possible embodiment. This description is illustrated with reference to the figures which follow, in which:

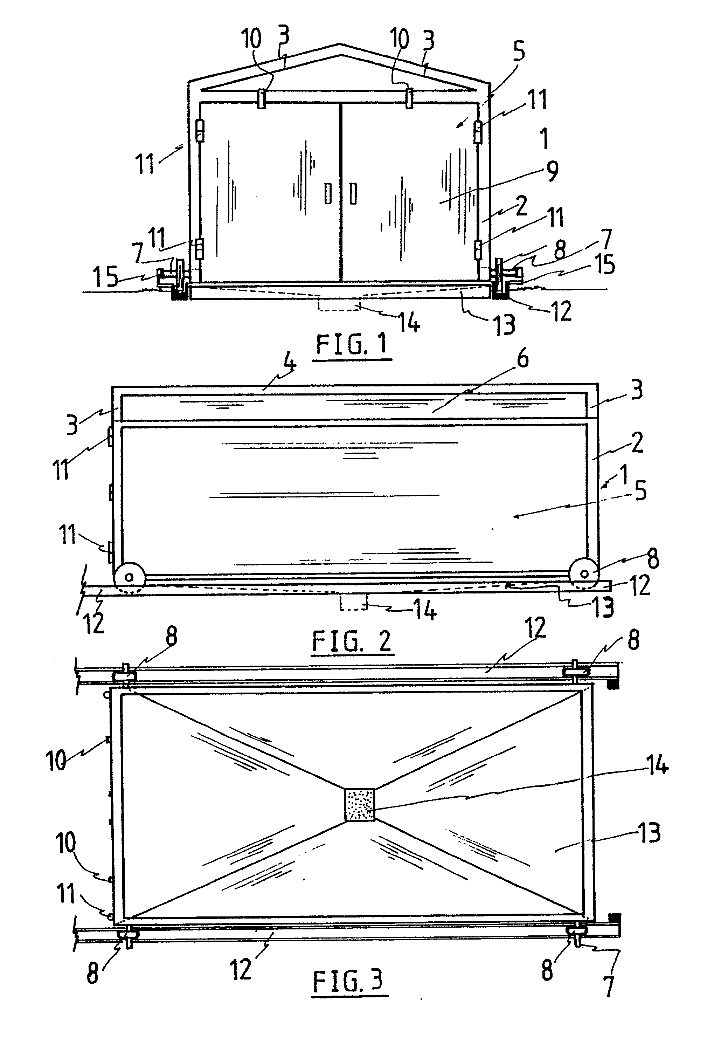

Figure 1 shows a front view of the carcass house according to the invention, along the side where the side wall is provided with doors;

Figure 2 shows a side view of the carcass house according to the invention;

Figure 3 shows a top view of the carcass house according to the invention above the impermeable base layer and the rails, while the roof section of the carcass house is removed.

The carcass house according to the invention, in its preferred embodiment, comprises a frame (1) which is composed of tubes (2) with square cross-section enclosing an oblong shape, the tubes (2) forming the ribs of said oblong shape, while along the front side of the carcass house, which is formed by one of the smallest side faces of the oblong shape, the bottom rib is missing.

The carcass house is also provided with frame tubes (3) which are situated in the plane of each of the two smallest side faces of said oblong shape, and which meet each other at an obtuse angle in the plane of symmetry in the lengthwise direction of the oblong-shaped frame (1), projecting above said oblong shape, while the corner points thus formed which lie in the plane determined by the smallest side faces of the oblong shape lying directly opposite each other are interconnected by a frame tube (4) which extends in the plane of symmetry in the lengthwise direction of the oblong-shaped frame (1).

The connections between these tubes (2), (3), (4) are made by known means for making a firm connection between tubes, for example by means of welding. On the top of the oblong-shaped frame (1) there is thus a structure which is the shape of a ridge roof in a house.

The upright side faces (5) of the oblong shape determined by the frame (1), with the exception of one of the smallest side faces, and also the two slanting side faces (6) of the ridge roof shape, are now formed by rectangular metal sheets of suitable dimensions which are fixed to the frame tubes by known means, for example by means of blind rivets or by means of welded joints. The triangular surfaces formed by the upright sides of the ridge roof shape remain open, in order to serve as air vents, which can be shut off, if desired, by means of netting, gratings or similar means (not shown).

Four axles (7) are fixed to the frame tubes (2) forming the bottom edge of the largest side faces (5) close to the corners of said faces (5), each axle carrying a wheel (8) in a bearing, and said wheels (8) extending parallel to said largest side faces (5), and coming out a little further down and being opposite each other in pairs along the two opposite side faces (5).

The smallest side face (5) of the oblong shape which is not shut off by a rectangular sheet is shut off by means of a double revolving door (9) made of sheet steel or any other sturdy material, while two clip locks (10) or other locking means are provided in order to lock the two door halves in the closed position. The clip locks (10) are made of metal strips which are fixed so that they are rotatable on the tube (2) lying above the door sections, and which are situated downwards from said fixing point in front of each door section, in order to prevent the doors from opening. For opening and closing of the doors (9) the two metal strips have to be turned upwards by hand, while these strips turn back downwards by themselves when they are released, and thus automatically lock the doors after they have been shut and the strips have been released. The revolving door (9) comprises two sections hinging outwards, the hinges (11) being fixed to the vertical ribs (2) surrounding said side face.

The four wheels (8) can travel on two parallel rails (12) of a length which is at least twice the length of the space which can be enclosed by the carcass house.

A rectangular concrete floor slab (13) extends from the connecting line between the two rail ends lying along the same side and covers the surface of the ground lying between the two rails up to halfway along said rails (12), said floor slab (13) being designed in such a way that it comprises four triangular faces abutting each other and sloping towards the same square collection well (14), said four triangular faces each starting off with one side which coincides with the full width of one of the tour sides of the rectangle determined by the concrete slab (13). The rectangular collection well (14) lies centrally in the above-mentioned rectangular surface.

For anchoring of the rails (12) a screed must be provided on the ground, six anchoring points preferably being provided per rail (12). The rails (12) are composed of U-shaped sections in which the wheels (8) can roll. For the stability of the structure the wheels are preferably anchored to the rails (12). This anchoring is carried out when the carcass house is situated above the concrete slab (13) by means of a mechanical connection (15) between the wheel axles (7) and the rails (12) lying below. This connection is made by means of a tube which is slidable on the end of the axle (7) and which is connected by means of a bar to another tube which is pushed at the same time over a bar welded to the rail (12).

The carcass house now stands in such a way on the rails (12) that the side face provided with the doors (9) is at right angles to the direction of the rails (12) and is situated along the side of the rail ends when the carcass house is erected above the concrete slab (13).

A collection bin can be placed in the collection well (14) in the concrete slab (13) and is easy to remove from it.

The carcass house according to the invention can now be, on the one hand, in a position in which it completely encloses the concrete slab (13) and, on the other, in a position in which the carcass house is completely beside said concrete slab (13). The carcass house is moved from the one position to the other by rolling it along the rails (12), and this can be carried out by pushing against it.

In both positions the carcass house lies close to the end of the rails (12). In order to prevent it from running off the rails (12), buffer stops (16) are fixed on each rail end to prevent the carcass house from being able to travel further than these end positions.

For the depositing of carcasses in the carcass house according to the invention, the carcass house is moved to one end of the rails, as a result of which the concrete slab (13) is completely exposed. If carcasses are already in the carcass house, the doors (9) must first be opened in order to allow the carcass house to travel away over these carcasses, in which case the open side wall allows through these carcasses. The new carcasses are then deposited on the concrete slab (13), or on the other carcasses, following which the carcass house with open doors (9) is moved back to the other end of the rails, until it completely covers the stacked carcasses. Finally, the doors (9) are closed again, and automatically prevented from opening again by the clip locks (10).

For loading of the carcasses by the collection services the carcass house is taken back with open doors (9) to one end of the rails (12), so that it comes to rest beside the concrete slab (13) with the carcasses stacked on it. In this case there is no risk at all of the collection service personnel coming into contact with these carcasses, and the stack of carcasses is very readily accessible for the loading, since it lies exposed in an open space on the concrete slab (13), while the carcass house cannot in any instance impede the loading work.

The collection well (14) or the bin placed in it can also be emptied by the collection service if necessary. After loading, the carcass house is moved on top of the concrete slab (13) again.

The advantage of the invention lies in the fact that, on the one hand, one has a storage space for carcasses which is easy and quick to construct, so that it can be ensured without much difficulty and without great expense that the storage space is placed in a position which is accessible for the collection services without their having to go onto the farm and, on the other, attention is paid to all requirements as regards hygiene and the risk of infection: Loading is possible without contact with the infected animals, and without hindrance from the carcass house itself, the blood and the escaping body fluids are collected and do not seep into the ground and/or reach ditches, the carcasses are protected from the prevailing weather conditions, the carcasses are out of reach of dogs, cats, rats or similar animals which are attracted by the carcasses and could spread the contagious diseases, and out of reach of the other healthy animals, and the storage space is ventilated. In this way the risk of further spread of a contagious disease is minimized.

The most suitable material for production of the carcass house according to the invention is a metal, because there is then no danger that the disease germs could be in the material of the carcass house, while for that reason it is highly advisable not to use, for example, wood.

Finally, it is also an attendant advantage of the carcass house according to the invention that the carcasses lie stacked out of sight of passers-by.

## Claims

1. Screening-off bin for the temporary storage of dead animals, or carcass house, comprising a rectangular bin with open bottom side, characterized in that one of the upright side walls is provided with a door (9) or similar device which permits this side wall to open, and in that at the bottom edges of the bin bordering the open bottom side wheels (8) which can travel over rails (12) disposed on the ground are provided, so that the bin can be moved by being propelled travelling along the rails (12), or can be propelled manually or automatically in some other way, while the bottom edges of the bin at all times remain at a slight distance from the ground, and in the case of which a layer (13) which is impermeable to fluids and in particular to body fluids is provided on the ground over a surface which can be enclosed in at least one specific position of the bin by its upright side walls (5), doors (9) and top wall (6), and in which the rails (12) are disposed in such a way and are of such length that the bin in at least one position on said rails (12) can completely expose the impermeable layer, while the bin stands in such a way on the rails that the upright side wall provided with a door (9) or similar device lies at right angles to the direction of rails (12), and during travel from the position in which the impermeable layer (13) is exposed to the position in which the impermeable layer (13) is enclosed it goes above this impermeable layer (13) first.

2. Carcass house according to Claim 1, characterized in that the impermeable layer (13) is designed with one or more sloping faces, of which the side(s) lying lowest down coincide(s) with an edge of a collection well (14) or a collection bin or of a gutter connected to such a well (14) or bin, or some other device which makes a fluid run from any point of the impermeable layer (13) through its slope into a well (14) or bin provided for it.

3. Carcass house according to one or more of the preceding claims, characterized in that the rectangular bin is made of sheets which are fixed against a frame (1) composed of tubes (2), along three side walls (5) of the oblong shape formed by the frame (1), while the fourth side wall comprises a door (9), and the top face (6) comprises sheets which are fixed on frame tubes (3) and (4) in the shape of a ridge roof lying symmetrically in the lengthwise direction.

4. Carcass house according to one or more of the preceding claims, characterized in that the layer (13) which is impermeable to fluids is made of concrete.

5. Carcass house according to one or more of the preceding claims, characterized in that the rails (12) are U-shaped, and four wheels (8) can travel in this U-shape, while they are supported on horizontal axles (7) which are fixed near each vertical tube (2) on the two horizontal tubes (2) of the frame.

6. Carcass house according to one or more of the preceding claims, characterized in that the door (9) is a double revolving door made up of two sections which can open outwards, hingedly fixed to the two vertical frame tubes (2) bounding this side wall of the carcass house.

7. Carcass house according to Claim 6, characterized in that a clip lock (10) is fixed above each door section of the double revolving door (9), each lock comprising a strip rotatably fixed to the horizontal frame tube (2) lying above these door sections, and in the downward position preventing one of the door sections from opening, while this strip can be turned upwards by hand to permit this opening, and returns to the downward position by itself when released.

8. Carcass house according to one or more of the preceding claims, characterized in that the impermeable layer (13) extends on the ground along the surface lying between the rails (12) which extends from the ends of said rails (12) situated along the same side to halfway along said rails (12), said rectangular surface corresponding to the surface which can be enclosed by the carcass house.

9. Carcass house according to one or more of the preceding claims, characterized in that the rails (12) are anchored in a screed provided on the ground and are placed in such a way and are exactly long enough for, on the one hand, placing the carcass house just above the impermeable layer (13) and for, on the other, placing the carcass house just next to this impermeable layer (13).

10. Carcass house according to one or more of the preceding claims, characterized in that the carcass house can be anchored to the rails (12) when it is above the impermeable layer (13), said anchoring taking place by means of a mechanical connection between the four wheel axles (7) and the rails (12) lying below, comprising a tube which can be pushed onto the lateral ends of the wheel axles (7) and another tube which is fixed in such a way that it is slidable and rotatable about a bar welded to the rail (12), while both tubes are interconnected by a bar fixed thereto.

11. Carcass house according to one or more of the preceding claims, characterized in that air vents are provided in the side walls (5) along the top or in the top wall, and are shut off by means of netting, gratings or similar devices.

EP 0 451 914 A1

FIG. 1

FIG. 2

FIG. 3

# EUROPEAN SEARCH REPORT

**EP 91 20 0814**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | CH-A-8 236 6   (ZWICKY)  --- | | A 01 K 29/00 <br> A 22 B 7/00 |
| A | DE-A-3 540 108   (STRICKER)  --- | | |
| A | BE-A-4 250 68   (S.A. ANCIENS ETABLISSEMENTS J. LAHAYE)  ----- | | |

| | | | TECHNICAL FIELDS SEARCHED (Int. Cl.5) |
|---|---|---|---|
| | | | A 01 K <br> A 22 B <br> A 01 C <br> A 01 F |

The present search report has been drawn up for all claims

| Place of search | Date of completion of search | Examiner |
|---|---|---|
| The Hague | 10 July 91 | VON ARX V.U. |